(19) Europäisches Patentamt / European Patent Office / Office européen des brevets

(11) EP 4 745 183 A1

(12) # EUROPEAN PATENT APPLICATION

(43) Date of publication:
**20.05.2026 Bulletin 2026/21**

(21) Application number: **25199792.0**

(22) Date of filing: **03.09.2025**

(51) International Patent Classification (IPC):
***C08J 5/22*** *(2006.01)*

(52) Cooperative Patent Classification (CPC):
**C08J 5/2231; B01D 67/0006; B01D 69/125;**
B01D 71/58; B01D 71/82; B01D 2323/30;
B01D 2325/16; B01D 2325/30; B01D 2325/42;
C08J 2325/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.11.2024 KR 20240162271**

(71) Applicant: **Toray Advanced Materials Korea Inc.**
**Gumi-si, Gyeongsangbuk-do 39389 (KR)**

(72) Inventors:
- **KIM, Ji Hwan**
  **Gyeongsangbuk-do (KR)**
- **LEE, Hye Ji**
  **Gyeongsangbuk-do (KR)**
- **JIN, Sang Woo**
  **Gyeongsangbuk-do (KR)**

(74) Representative: **Mewburn Ellis LLP**
**Aurora Building**
**Counterslip**
**Bristol BS1 6BX (GB)**

(54) **COMPOSITION FOR FORMING ANION EXCHANGE POLYMER, ANION EXCHANGE MEMBRANE AND METHOD OF MANUFACTURING ANION EXCHANGE MEMBRANE**

(57) Provided are a composition for forming an anion exchange polymer, the composition including a first monomer represented by Formula A and a crosslinking agent represented by Formula B, an anion exchange membrane including a crosslinked product thereof, and a method of producing an anion exchange membrane.

Formula A

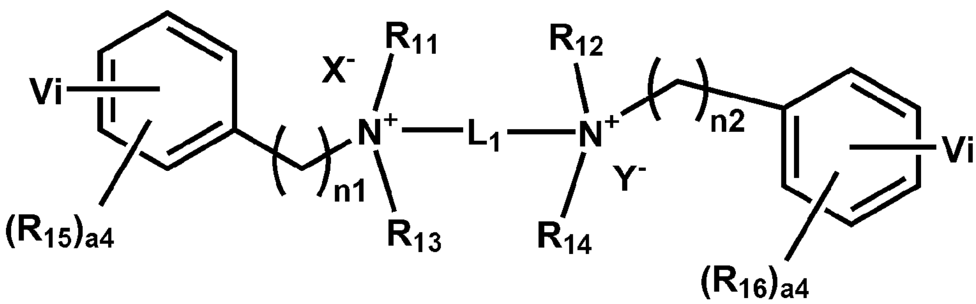

Formula B

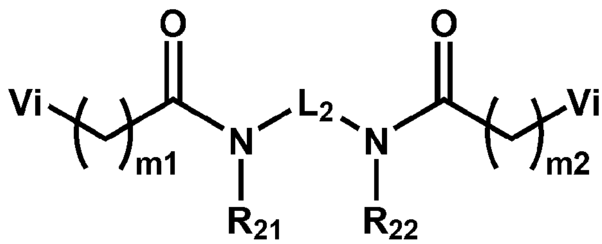

Detailed descriptions of Formulae A and B are provided in the present specification.

EP 4 745 183 A1

FIG. 1

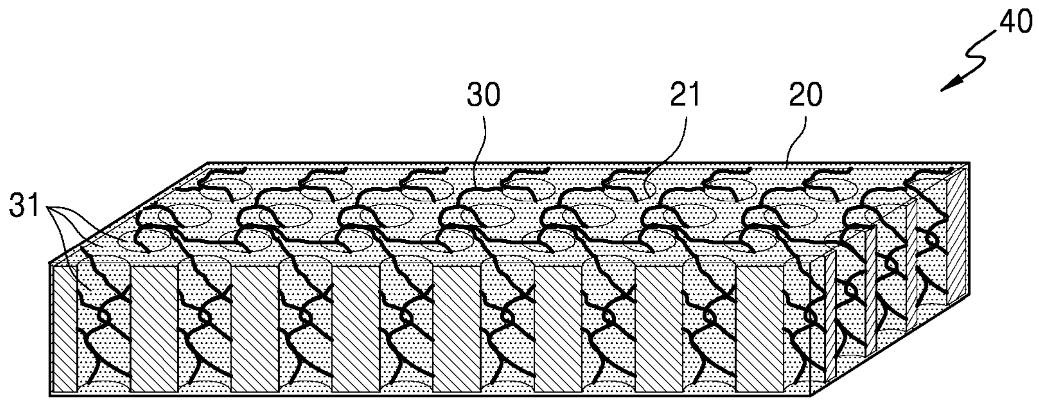

## Description

CROSS-REFERENCE TO RELATED APPLICATION

This application is based on and claims priority under 35 U.S.C. §119 to Korean Patent Application No. 10-2024-0162271, filed on November 14, 2024, in the Korean Intellectual Property Office, the disclosure of which is incorporated by reference herein in its entirety.

BACKGROUND

1. Field

The disclosure relates to a composition for forming an anion exchange polymer, an anion exchange membrane, and a method of manufacturing an anion exchange membrane.

2. Description of the Related Art

Ion exchange membranes are synthetic resin membranes that selectively allow passage of only one type of ion, that is, either cations or anions. Cation exchange membranes have negatively charged functional groups and can selectively permit passage of cations, while anion exchange membranes have positively charged functional groups and can selectively permit passage of anions. Ion exchange membranes are not only widely utilized, based on electrodialysis technology, in various fields including seawater concentration and desalination, purification of organic acids, and recovery of valuable metals, but are also being applied to hydrogen production technology through water electrolysis, which has recently attracted attention as a means of securing sustainable energy in light of $CO_2$ reduction issues caused by global warming. Water electrolysis technology using ion exchange membranes includes cation exchange membrane or proton exchange membrane water electrolysis technology utilizing proton transport, and anion exchange membrane water electrolysis technology using anion exchange membranes in alkaline solution environments. Anion exchange membrane water electrolysis technology utilizes water electrolysis through conduction of hydroxide ions and, compared to proton exchange membrane water electrolysis technology using hydrogen ion conduction, has the advantage of enabling the use of low-cost water splitting catalysts, and as a result has recently become the focus of extensive research.

Such anion exchange membranes may be applied to water treatment systems including electrodialysis, bipolar membrane electrodialysis, capacitive deionization, and electrodeionization, or may be applied to systems including fuel cells, water electrolysis, reverse electrodialysis, and redox flow batteries. As anion exchange membranes, perfluorinated anion exchange membranes having strong chemical resistance under acidic or basic conditions may be used, but due to high costs, hydrocarbon-based anion exchange membranes may be applied in actual systems. However, due to chemical resistance problems of hydrocarbon-based anion exchange membranes, there are limitations in applicable processes and conditions.

SUMMARY

Provided is a hydrocarbon-based anion exchange membrane having excellent chemical resistance, low surface resistance and high ion exchange capacity.

Additional aspects will be set forth in part in the description which follows and, in part, will be apparent from the description, or may be learned by practice of the presented embodiments of the disclosure.

According to an aspect of the disclosure, a composition for forming an anion exchange polymer includes a first monomer represented by Formula A, and a crosslinking agent represented by Formula B:

Formula A

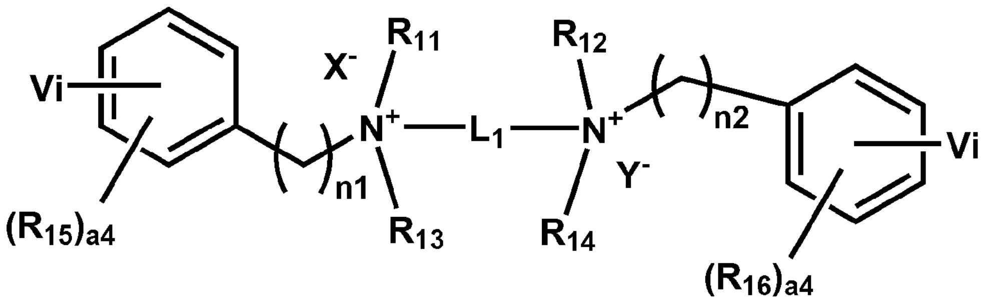

Formula B

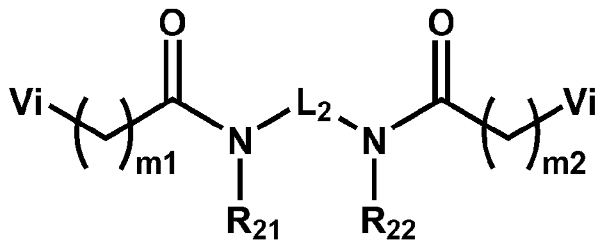

wherein, in Formulae A and B,
Vi is a vinyl group,
$R_{11}$ to $R_{16}$, $R_{21}$ and $R_{22}$ may each independently be selected from hydrogen, deuterium, a substituted or unsubstituted $C_1$-$C_{20}$ alkyl group, and a substituted or unsubstituted $C_2$-$C_{20}$ alkenyl group,
$R_{11}$ and $R_{12}$ may optionally be bonded to each other,
$R_{13}$ and $R_{14}$ may optionally be bonded to each other,
$R_{21}$ and $R_{22}$ may optionally be bonded to each other,
a4 may be an integer from 0 to 4,
$L_1$ and $L_2$ may each independently be selected from a single bond and a substituted or unsubstituted $C_1$-$C_{20}$ alkylene group,
$X^-$ and $Y^-$ may each independently be selected from F-, Cl-, Br and $I^-$, and
each of n1, n2, m1, and m2 may be an integer from 0 to 10.

According to another aspect of the disclosure, an anion exchange membrane includes: a porous polymer support; and an anion exchange polymer, wherein the anion exchange polymer is a crosslinked product of the composition for forming the anion exchange polymer.

According to another aspect of the disclosure, a method of manufacturing an anion exchange membrane includes: preparing a composition for forming an anion exchange polymer including a first monomer represented by Formula A, a crosslinking agent represented by Formula B, a photoinitiator, and a solvent; impregnating a porous polymer support with the composition for forming an anion exchange polymer to fill at least a portion of a surface and an interior of pores of the porous polymer support with the composition for forming an anion exchange polymer; pressing a film onto at least a surface of the porous polymer support filled with the composition for forming an anion exchange polymer to produce a laminate in which the film and the porous polymer support are joined; irradiating the laminate with light and crosslinking the composition for forming an anion exchange polymer to form an anion exchange polymer which is a crosslinked product of the composition for forming an anion exchange polymer in at least a portion of a surface and an interior of pores of the porous polymer support; and forming an anion exchange membrane by peeling off the film from the porous polymer support of which at least a portion of the surface and the interiors of the pores is filled with the anion exchange polymer.

BRIEF DESCRIPTION OF THE DRAWING

The above and other aspects, features, and advantages of certain embodiments of the disclosure will be more apparent from the following description taken in conjunction with FIGURE, which is a schematic diagram of an anion exchange membrane according to an embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a composition for forming an anion exchange polymer, an anion exchange membrane, and a method of manufacturing an anion exchange membrane according to an embodiment will be described in more detail. The following are provided by way of example only and the present disclosure is not limited thereby, and the present disclosure is defined only by the scope of the claims set forth below.

Unless defined otherwise, all technical and scientific terms used herein have the same meaning as commonly understood by one of ordinary skill in the art to which this disclosure belongs. In case of conflict, this specification, including definitions, will prevail.

Although methods and materials similar or equivalent to those described herein may be used in the practice or testing of the present disclosure, suitable methods and materials are described herein.

The term "include" in this specification is used to indicate the addition and/or inclusion of other components, unless specifically stated to the contrary, rather than the exclusion of other components.

The numerical values set forth in this specification may be understood to include the meaning of "about" even if not explicitly stated.

In this specification, a and b in "carbon number a to b" or "$C_a$-$C_b$" indicate the number of carbon atoms in a specific functional group. That is, the functional group may include carbon atoms in the number of a to b. For example, "an alkyl group having 1 to 2 carbon atoms" or "a $C_1$-$C_2$ alkyl group" is an alkyl group having 1 to 2 carbon atoms, i.e., $-CH_3$ and $-CH_2CH_3$.

As used herein, the term "alkyl" means a branched (branched) or unbranched (straight-chain) aliphatic hydrocarbon. Alkyl groups include, but are not necessarily limited to, a methyl group, an ethyl group, an n-propyl group, an i-propyl group, an n-butyl group, an i-butyl group, an s-butyl group, a tert-butyl group, a pentyl group, a hexyl group, a cyclopropyl group, a cyclopentyl group, a cyclohexyl group, a cycloheptyl group, and the like, each of which may be optionally substituted or unsubstituted.

The term "alkylene" as used herein refers to a divalent group having the same structure as "alkyl". Alkylene groups include, but are not necessarily limited to, a methylene group, an ethylene group, a propylene group, a butylene group, a pentylene group, a hexylene group, a heptylene group, and the like, each of which may be optionally substituted or unsubstituted.

The term "alkenyl" as used herein refers to a monovalent hydrocarbon containing one or more carbon-to-carbon double bonds in the middle or terminal of an alkyl group. Alkenyl groups include, but are not necessarily limited to, an ethenyl group, a propenyl group, a butenyl group, and each of these may be optionally substituted or unsubstituted. Meanwhile, the ethenyl group may also be referred to as a vinyl group.

As used herein, "substitution" is induced by the exchange of one or more hydrogens in an unsubstituted mother group with another atom or functional group. For example, when a functional group is considered to be "substituted", the wording indicates that the functional group is substituted with one or more substituents selected from deuterium, a $C_1$-$C_{40}$ alkyl group, a $C_1$-$C_{40}$ alkoxy group, a $C_2$-$C_{40}$ alkenyl group, a $C_2$-$C_{40}$ alkynyl group, a $C_3$-$C_{40}$ cycloalkyl group, a $C_3$-$C_{40}$ cycloalkenyl group, a $C_6$-$C_{40}$ aryl group, and the like. When a functional group is described as being "optionally substituted," the wording indicates that the functional group may be substituted with the substituents described above.

For anion exchange membranes, perfluorinated anion exchange membranes and hydrocarbon-based anion exchange membranes are known. Hydrocarbon-based anion exchange membranes are cheaper than perfluorinated anion exchange membranes, but have insufficient chemical resistance. In addition, an anion exchange membrane incorporating a support has a certain fraction of the support present, which limits the reduction of surface resistance and/or the increase in ion exchange capacity for enhancing concentration and desalination performance.

The inventors of the present application have solved the above-described problems and provided an anion exchange membrane which is a hydrocarbon-based anion exchange membrane, has sufficiently low surface resistance, sufficiently high ion exchange capacity, and excellent chemical resistance.

According to an aspect of the disclosure, provided is a composition for forming an anion exchange polymer, the composition including a first monomer represented by Formula A, and a crosslinking agent represented by Formula B:

Formula A

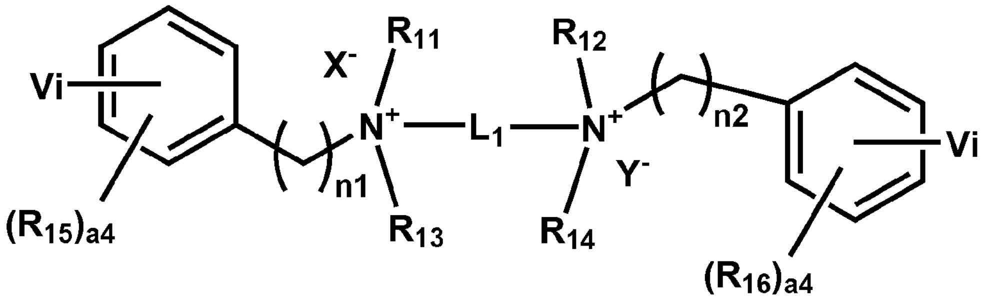

Formula B

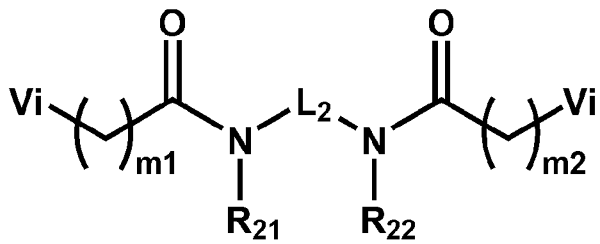

wherein Vi in Formulae A and B is a vinyl group.

The vinyl group is a group represented by

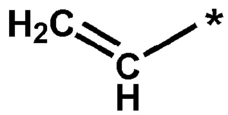

(* is a bonding site with a neighboring atom) and may be referred to as a $C_2$ alkenyl group or an ethenyl group.

First monomer

$R_{11}$ to $R_{16}$ in Formula A may each independently be selected from hydrogen, deuterium, a substituted or unsubstituted $C_1$-$C_{20}$ alkyl group, and a substituted or unsubstituted $C_2$-$C_{20}$ alkenyl group.

According to an embodiment, $R_{11}$ to $R_{16}$ may each independently be hydrogen, deuterium, a methyl group, an ethyl group, a propyl group, an ethenyl group, a propylene group, etc.

According to an embodiment, $R_{11}$ and $R_{12}$ may be optionally bonded to each other. That is, $R_{11}$ and $R_{12}$ may or may not bind to each other. For example, a ring consisting of $N^+$-$R_{11}$-$R_{12}$-$N^+$-$L_1$ may be formed.

According to an embodiment, $R_{13}$ and $R_{14}$ may be optionally bonded to each other. That is, $R_{13}$ and $R_{14}$ may or may not bind to each other. For example, a ring consisting of $N^+$-$R_{13}$-$R_{14}$-$N^+$-$L_1$ may be formed.

$R_{15}$ and $R_{16}$ in Formula A may each independently be hydrogen or deuterium.

a4 in Formula A may be an integer from 0 to 4. According to an embodiment, a4 may be 0 or 4.

$L_1$ in Formula A may be selected from a single bond and a substituted or unsubstituted $C_1$-$C_{20}$ alkylene group.

According to an embodiment, $L_1$ may be a single bond, a substituted or unsubstituted methylene group, a substituted or unsubstituted ethylene group, or a substituted or unsubstituted propylene group.

$X^-$ and $Y^-$ in Formula A may each independently be selected from F-, $Cl^-$, $Br^-$, and $I^-$.

According to an embodiment, $X^-$ and $Y^-$ may be identical to each other.

According to an embodiment, at least one of $X^-$ and $Y^-$ may be $Cl^-$.

Each of n1 and n2 in Formula A may be an integer from 0 to 10.

According to an embodiment, each of n1 and n2 may be an integer from 0 to 2.

According to an embodiment, n1 and n2 may be identical to each other.

According to an embodiment, at least one of n1 and n2 may be 1.

According to an embodiment, the first monomer may be represented by any one of Formulae A-1 to A-6:

Formula A-1

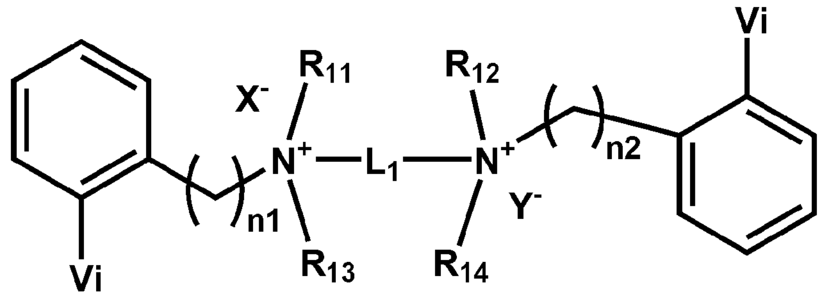

Formula A-2

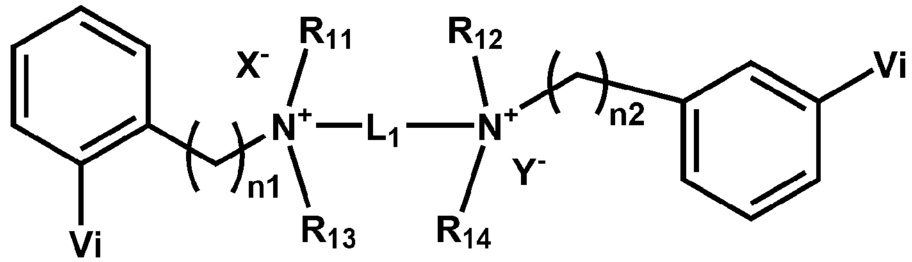

Formula A-3

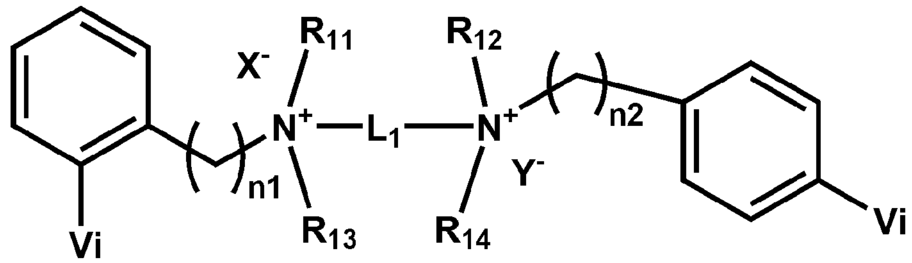

Formula A-4

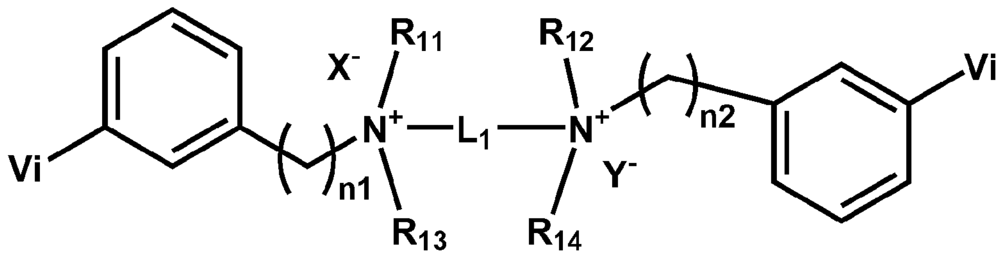

Formula A-5

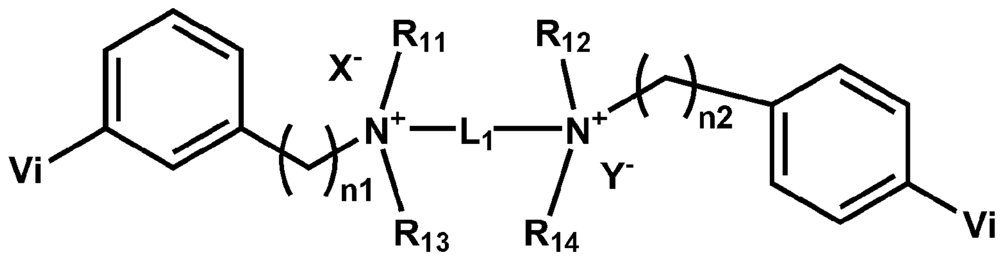

Formula A-6

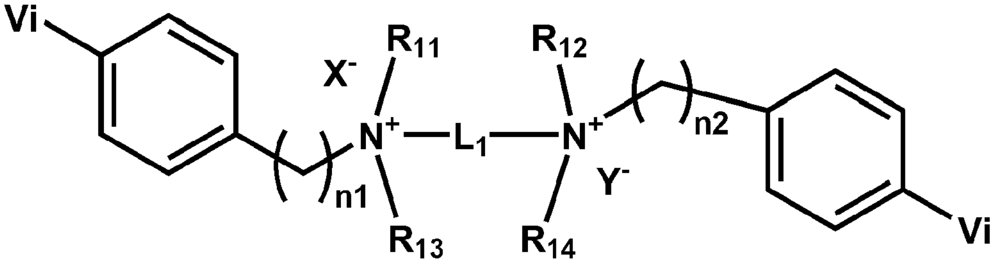

wherein Vi, $R_{11}$ to $R_{14}$, $L_1$, $X^-$, $Y^-$, n1, and n2 in Formulae A-1 to A-6 are each as described in Formula A.

According to an embodiment, a group represented by

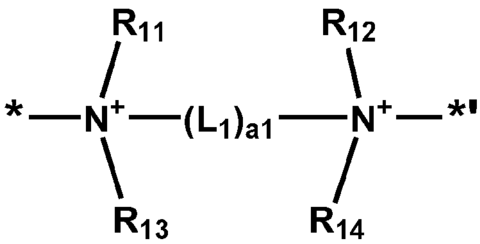

in Formulae A and A-1 to A-6 may be represented by Formula A-11 or A-12:

Formula A-11

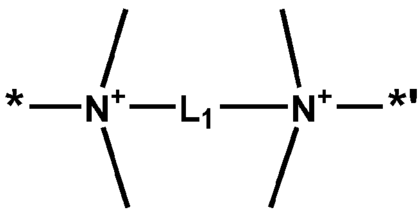

Formula A-12

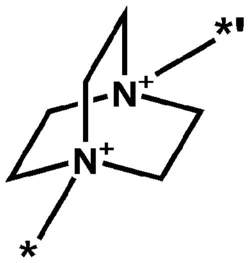

wherein each of * and *' indicates a bonding site to a neighboring atom.

Referring to Formula A-11, it can be seen that in Formula A, $R_{11}$ and $R_{12}$ are not bonded to each other, and $R_{13}$ and $R_{14}$ are not bonded to each other.

Referring to Formula A-12, it can be seen that in Formula A, $L_1$ is ethylene, $R_{11}$ and $R_{12}$ are bonded to each other, and $R_{13}$ and $R_{14}$ are bonded to each other.

According to an embodiment, the first monomer may be at least one selected from compounds A1 to A3:

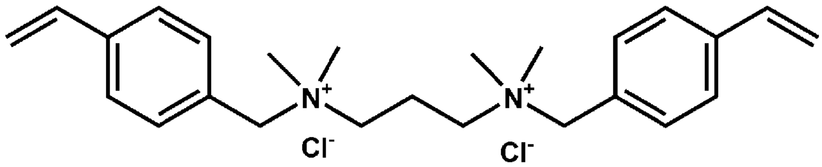

A1

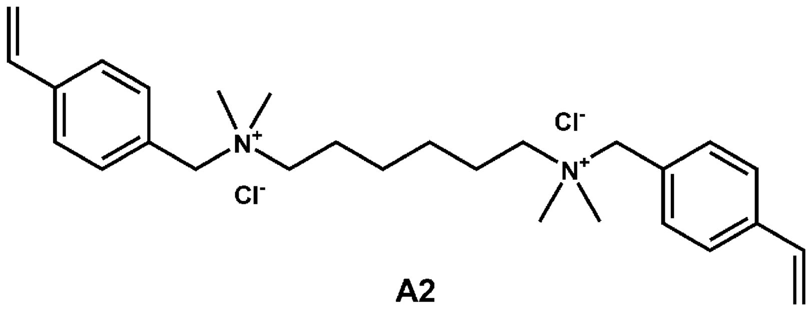

A2

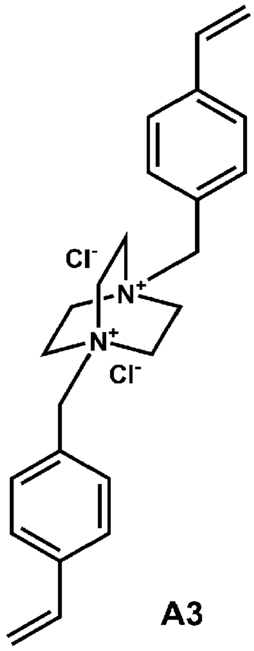

A3

For example, the first monomer may be compound A3.

Crosslinking agent

Referring to Formula B above, the crosslinking agent is a substance having two NC(=O) functional groups and two vinyl groups at opposite terminals. Accordingly, an anion exchange membrane formed from a composition including the crosslinking agent can have a low level of surface resistance, a high level of ion exchange capacity, and excellent chemical resistance.

$R_{21}$ and $R_{22}$ in Formula B may each independently be selected from hydrogen, deuterium, a substituted or unsubstituted $C_1$-$C_{20}$ alkyl group, and a substituted or unsubstituted $C_2$-$C_{20}$ alkenyl group.

According to an embodiment, $R_{21}$ and $R_{22}$ may each independently be hydrogen, deuterium, a methyl group, an ethyl group, a propyl group, an ethenyl group, or a propylene group.

According to an embodiment, $R_{21}$ and $R_{22}$ may be optionally bonded to each other. For the bonding between $R_{21}$ and $R_{22}$ compound B1 may be referred to:

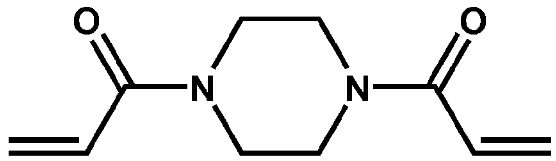

**B1**

Referring to compound B1, it can be seen that in Formula B, $L_2$ is an ethylene group, and $R_{21}$ and $R_{22}$ are bonded to each other.

In Formula B, $L_2$ may be selected from a single bond and a substituted or unsubstituted $C_1$-$C_{20}$ alkylene group.

According to an embodiment, $L_2$ may be a substituted or unsubstituted methylene group, a substituted or unsubstituted ethylene group, or a substituted or unsubstituted propylene group.

Each of m1 and m2 in Formula B may be an integer from 0 to 10.

According to an embodiment, each of m1 and m2 may be an integer from 0 to 2.

According to an embodiment, m1 and m2 may be identical to each other.

According to an embodiment, at least one of m1 and m2 may be 0.

According to an embodiment, the crosslinking agent may be represented by Formula B-1:

Formula B-1

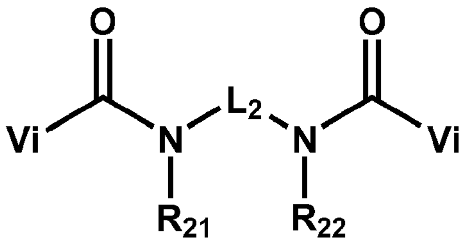

Each of Vi, $R_{21}$, $R_{22}$ and $L_2$ in Formula B-1 is as described in connection with Formula B.

According to an embodiment, the crosslinking agent may be at least one selected from compounds B1 to B3:

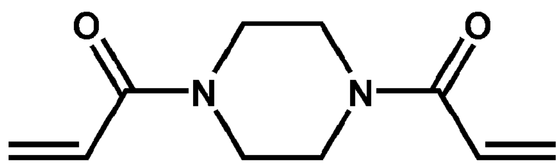

**B1**

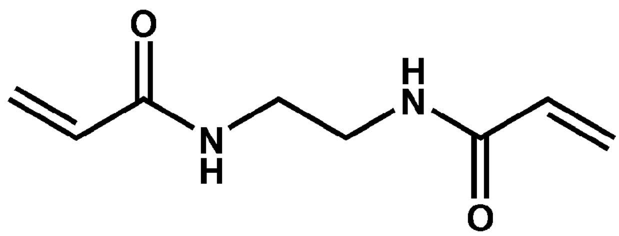

**B2**

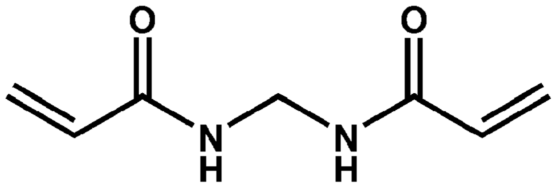

B3

Second monomer

The composition for forming the anion exchange polymer may further include a second monomer represented by Formula C:

Formula C

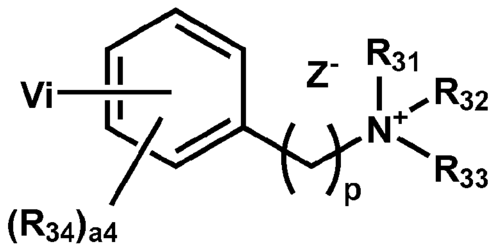

Vi in Formula C may be a vinyl group.

$R_{31}$ to $R_{34}$ in Formula C may each independently be selected from hydrogen, deuterium, a substituted or unsubstituted $C_1$-$C_{20}$ alkyl group, and a substituted or unsubstituted $C_2$-$C_{20}$ alkenyl group.

According to an embodiment, $R_{31}$ to $R_{34}$ may each independently be hydrogen, deuterium, a methyl group, an ethyl group, a propyl group, an ethenyl group, or a propylene group.

According to an embodiment, $R_{31}$ to $R_{33}$ may be identical to each other.

According to an embodiment, $R_{34}$ may be hydrogen or deuterium.

a4 in Formula C may be an integer from 0 to 4. According to an embodiment, a4 may be 0 or 4.

$Z^-$ in Formula C may be selected from $F^-$, $Cl^-$, $Br^-$, and $I^-$.

According to an embodiment, $X^-$, $Y^-$, and $Z^-$ in Formulae A and C may be identical to each other.

p in Formula C may be an integer from 0 to 10.

According to an embodiment, p may be 0, 1, or 2.

According to an embodiment, the second monomer may be represented by Formula C-1 or C-2:

[00103] Formula C-1

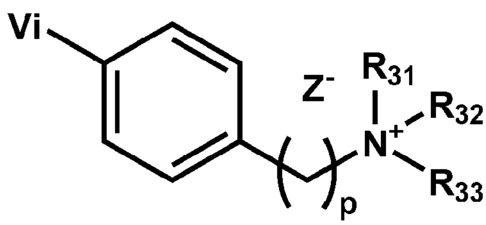

Formula C-2

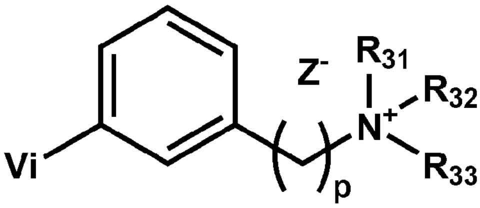

Vi, $R_{31}$ to $R_{33}$, Z- and p in Formulae C-1 and C-2 are each as described in connection with Formula C.

According to an embodiment, the second monomer may be compound C1:

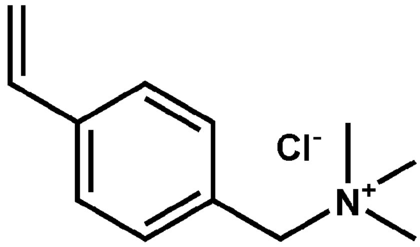

**C1**

Composition for forming anion exchange polymer

When the composition for forming the above anion exchange polymer is crosslinked, each of the first monomer, the crosslinking agent, and the second monomer may crosslink with each other through the vinyl group.

According to an embodiment, the ratio of the number of moles of the first monomer to the number of moles of the crosslinking agent may be in the range of about 0.9:1 to about 4.5:1. For example, the molar ratio of the first monomer to the crosslinking agent may be in the range of about 0.92:1 to about 4.25:1.

According to an embodiment, the ratio of the number of moles of the first monomer to moles of the second monomer may be in the range of about 0.65:1 to about 0.85:1. For example, the molar ratio of the first monomer and the second monomer may be in the range of about 0.7:1 to about 0.8:1.

According to an embodiment, the ratio of the number of moles of the second monomer to the number of moles of the crosslinking agent may be in the range of about 1:0.2 to about 1:0.7. For example, the molar ratio of the second monomer and the crosslinking agent may be in the range of about 1:0.3 to about 1:0.5.

The composition for forming the anion exchange polymer includes at least the first monomer and the crosslinking agent. When the amounts of the first monomer, crosslinking agent, and second monomer are within the specified ranges, there is no deterioration in the solubility characteristics of the composition, and the composition for forming the anion exchange polymer can have excellent chemical resistance under acidic or basic conditions while simultaneously having a low level of surface resistance and a high level of ion exchange capacity under acidic or basic conditions.

Anion exchange membrane

According to another aspect, provided is an anion exchange membrane including a porous polymer support and an anion exchange polymer. The anion exchange polymer is a crosslinked product of the composition for forming the anion exchange polymer.

According to an embodiment, the porous polymer support may be a membrane structure, a nonwoven structure, a fabric structure, or a mesh structure. The porous polymer support may have a sponge shape or a three-dimensional network shape.

According to an embodiment, the membrane structure may be a structure in which pores are regularly arranged or a three-dimensional mesh structure.

The anion exchange polymer may be located on at least a portion of the surface and the interiors of the pores of the porous polymer support. For example, the anion exchange polymer may be located on the surface of the porous polymer support. In some embodiments, the anion exchange polymer may be located inside the pores of the porous polymer support. In some embodiments, the anion exchange polymer may be located both on the surface of the porous polymer support and the interiors of the pores of the porous polymer support.

According to an embodiment, the anion exchange polymer may be uniformly distributed on the surface and inside

the pores of the porous polymer support.

According to an embodiment, the average thickness of the anion exchange membrane may be in the range of about 50 micrometers (μm) to about 200 μm. For example, the average thickness of the anion exchange membrane may be in the range of about 50 μm to about 150 μm.

FIGURE is a schematic diagram of an anion exchange membrane according to an embodiment.

Referring to FIGURE, an anion exchange polymer 31 having a cationic functional group included in an anion exchange membrane 40 may be uniformly positioned on the surface of a porous polymer support 20 and inside a pore 21.

The anion exchange polymer 31 may be a crosslinked product of the composition for forming the anion exchange polymer described above. That is, the first monomer and the crosslinking agent may be crosslinked to form the anion exchange polymer, or the first monomer, the crosslinking agent and the second monomer may all be crosslinked to form the anion exchange polymer. For example, the bonding product of the first monomers forms an anion exchange polymer backbone 30, and the crosslinking agent may crosslink the anion exchange polymer backbone 30. In some embodiments, the bonding product of the first monomer and the crosslinking agent may form the anion exchange polymer backbone 30, and the first monomer or the crosslinking agent may crosslink the anion exchange polymer backbone 30. For example, the bonding product of the first monomer and the second monomer forms the anion exchange polymer backbone 30, and the crosslinking agent may crosslink the anion exchange polymer backbone 30.

According to an embodiment, the porous polymer support 20 may include one or more polymers selected from polyethylene, polypropylene, polyethylene terephthalate, polyvinyl alcohol, polybenzimidazole, polyarylene sulfide, polyether ether ketone, polyether sulfone, polysulfone, polystyrene, polyarylene ether sulfone, and polyether ketone. For example, the porous polymer support 20 may include polypropylene (PP).

According to an embodiment, the anion exchange membrane 40 may be used for electrodialysis, bipolar membrane electrodialysis, electrodeionization, capacitive deionization, or water electrolysis. Additionally, anion exchange membranes may be used in energy systems such as fuel cells, water electrolysis, reverse electrodialysis, and redox flow batteries.

<u>Surface resistance, ion exchange capacity and degree of change in each</u>

The anion exchange membrane may have a small surface resistance change ratio in acidic solutions or basic solutions. The anion exchange membrane may have a small ion exchange capacity change ratio in an acidic solution or a basic solution. That is, the anion exchange membrane may have excellent chemical resistance. Examples of the acidic solutions are $H_2SO_4$, HCl, $CH_3COOH$, etc. Examples of the basic solutions are NaOH, KOH, $Ca(OH)_2$, etc.

According to an embodiment, the anion exchange membrane may satisfy Inequality 1A:

Inequality 1A

$$0\ \Omega\cdot\text{cm}^2 \leq |SR^a_{20} - SR_0| \leq 0.5\ \Omega\cdot\text{cm}^2.$$

In Inequality 1A,

$SR^a_{20}$ is the surface resistance of the anion exchange membrane after 20 days in an acidic solution.

$SR_0$ is the surface resistance of the initial anion exchange membrane.

Inequality 1A indicates that the surface resistance of the anion exchange membrane remains substantially unchanged even after being exposed to an acidic solution for 20 days.

According to an embodiment, $|SR^a_{20} - SR_0|$ in Inequality 1A may be in the range of 0 Ω·cm$^2$ to about 0.45 Ω·cm$^2$, 0 Ω·cm$^2$ to about 0.44 Ω·cm$^2$, 0 Ω·cm$^2$ to about 0.43 Ω·cm$^2$, 0 Ω·cm$^2$ to about 0.42 Ω·cm$^2$, 0 Ω·cm$^2$ to about 0.41 Ω·cm$^2$, 0 Ω·cm$^2$ to about 0.40 Ω·cm$^2$, 0 Ω·cm$^2$ to about 0.39 Ω·cm$^2$, 0 Ω·cm$^2$ to about 0.38 Ω·cm$^2$, 0 Ω·cm$^2$ to about 0.37 Ω·cm$^2$, 0 Ω·cm$^2$ to about 0.36 Ω·cm$^2$, 0 Ω·cm$^2$ to about 0.35 Ω·cm$^2$, 0 Ω·cm$^2$ to about 0.34 Ω·cm$^2$, 0 Ω·cm$^2$ to about 0.33 Ω·cm$^2$, 0 Ω·cm$^2$ to about 0.32 Ω·cm$^2$, 0 Ω·cm$^2$ to about 0.31 Ω·cm$^2$, 0 Ω·cm$^2$ to about 0.30 Ω·cm$^2$, 0 Ω·cm$^2$ to about 0.29 Ω·cm$^2$, 0 Ω·cm$^2$ to about 0.28 Ω·cm$^2$, 0 Ω·cm$^2$ to about 0.27 Ω·cm$^2$, 0 Ω·cm$^2$ to about 0.26 Ω·cm$^2$, 0 Ω·cm$^2$ to about 0.25 Ω·cm$^2$, 0 Ω·cm$^2$ to about 0.24 Ω·cm$^2$, 0 Ω·cm$^2$ to about 0.23 Ω·cm$^2$, 0 Ω·cm$^2$ to about 0.22 Ω·cm$^2$, 0 Ω·cm$^2$ to about 0.21 Ω·cm$^2$, 0 Ω·cm$^2$ to about 0.20 Ω·cm$^2$, 0 Ω·cm$^2$ to about 0.19 Ω·cm$^2$, 0 Ω·cm$^2$ to about 0.18 Ω·cm$^2$, 0 Ω·cm$^2$ to about 0.17 Ω·cm$^2$, 0 Ω·cm$^2$ to about 0.16 Ω·cm$^2$, 0 Ω·cm$^2$ to about 0.15 Ω·cm$^2$, 0 Ω·cm$^2$ to about 0.14 Ω·cm$^2$, 0 Ω·cm$^2$ to about 0.13 Ω·cm$^2$, 0 Ω·cm$^2$ to about 0.12 Ω·cm$^2$, 0 Ω·cm$^2$ to about 0.11 Ω·cm$^2$, 0 Ω·cm$^2$ to about 0.10 Ω·cm$^2$, 0 Ω·cm$^2$ to about 0.09 Ω·cm$^2$, 0 Ω·cm$^2$ to about 0.08 Ω·cm$^2$, 0 Ω·cm$^2$ to about 0.07 Ω·cm$^2$, 0 Ω·cm$^2$ to about 0.06 Ω·cm$^2$, 0 Ω·cm$^2$ to about 0.05 Ω·cm$^2$, 0 Ω·cm$^2$ to about 0.04 Ω·cm$^2$, 0 Ω·cm$^2$ to about 0.03 Ω·cm$^2$, 0 Ω·cm$^2$ to about 0.02 Ω·cm$^2$, or 0 Ω·cm$^2$ to about 0.01 Ω·cm$^2$.

According to an embodiment, each of $SR^a_{20}$ and $SR_0$ in Inequality 1A may be in the range of about 0.1 Ω·cm$^2$ to

about 3.0 Ω·cm².

According to an embodiment, the anion exchange membrane may satisfy Inequality 1B:

Inequality 1B

$$0\ \Omega\cdot\mathrm{cm}^2 \le \left|SR_{20}^{b} - SR_0\right| \le 0.5\ \Omega\cdot\mathrm{cm}^2.$$

In Inequality 1B,

$SR^b_{20}$ is the surface resistance of the anion exchange membrane after 20 days in a basic solution, and

$SR_0$ is the surface resistance of the initial anion exchange membrane.

Inequality 1B indicates that the surface resistance of the anion exchange membrane remains substantially unchanged even after being exposed to a basic solution for 20 days.

According to an embodiment, $\left|SR_{20}^{b} - SR_0\right|$ in Inequality 1B may be in the range of 0 Ω·cm² to about 0.45 Ω·cm², 0 Ω·cm² to about 0.44 Ω·cm², 0 Ω·cm² to about 0.43 Ω·cm², 0 Ω·cm² to about 0.42 Ω·cm², 0 Ω·cm² to about 0.41 Ω·cm², 0 Ω·cm² to about 0.40 Ω·cm², 0 Ω·cm² to about 0.39 Ω·cm², 0 Ω·cm² to about 0.38 Ω·cm², 0 Ω·cm² to about 0.37 Ω·cm², 0 Ω·cm² to about 0.36 Ω·cm², 0 Ω·cm² to about 0.35 Ω·cm², 0 Ω·cm² to about 0.34 Ω·cm², 0 Ω·cm² to about 0.33 Ω·cm², 0 Ω·cm² to about 0.32 Ω·cm², 0 Ω·cm² to about 0.31 Ω·cm², 0 Ω·cm² to about 0.30 Ω·cm², 0 Ω·cm² to about 0.29 Ω·cm², 0 Ω·cm² to about 0.28 Ω·cm², 0 Ω·cm² to about 0.27 Ω·cm², 0 Ω·cm² to about 0.26 Ω·cm², 0 Ω·cm² to about 0.25 Ω·cm², 0 Ω·cm² to about 0.24 Ω·cm², 0 Ω·cm² to about 0.23 Ω·cm², 0 Ω·cm² to about 0.22 Ω·cm², 0 Ω·cm² to about 0.21 Ω·cm², 0 Ω·cm² to about 0.20 Ω·cm², 0 Ω·cm² to about 0.19 Ω·cm², 0 Ω·cm² to about 0.18 Ω·cm², 0 Ω·cm² to about 0.17 Ω·cm², 0 Ω·cm² to about 0.16 Ω·cm², 0 Ω·cm² to about 0.15 Ω·cm², 0 Ω·cm² to about 0.14 Ω·cm², 0 Ω·cm² to about 0.13 Ω·cm², 0 Ω·cm² to about 0.12 Ω·cm², 0 Ω·cm² to about 0.11 Ω·cm², 0 Ω·cm² to about 0.10 Ω·cm², 0 Ω·cm² to about 0.09 Ω·cm², 0 Ω·cm² to about 0.08 Ω·cm², 0 Ω·cm² to about 0.07 Ω·cm², 0 Ω·cm² to about 0.06 Ω·cm², 0 Ω·cm² to about 0.05 Ω·cm², 0 Ω·cm² to about 0.04 Ω·cm², 0 Ω·cm² to about 0.03 Ω·cm², 0 Ω·cm² to about 0.02 Ω·cm², or 0 Ω·cm² to about 0.01 Ω·cm².

According to an embodiment, each of $SR^b_{20}$ and $SR_0$ in Inequality 1B may be in the range of about 0.1 Ω·cm² to about 3.0 Ω·cm².

According to an embodiment, the anion exchange membrane may satisfy Inequality 2A:

Inequality 2A

$$0\ \mathrm{meq/g} \le \left|IEC_0 - IEC_{20}^{a}\right| \le 0.2\ \mathrm{meq/g}.$$

In Inequality 2A,

$IEC^a_{20}$ is the ion exchange capacity of an anion exchange membrane after 20 days in an acidic solution, and
$IEC_0$ is the ion exchange capacity of the initial anion exchange membrane.

Inequality 2A indicates that the ion exchange capacity of the anion exchange membrane remains substantially unchanged even after being exposed to an acidic solution for 20 days.

According to an embodiment, $\left|IEC_0 - IEC_{20}^{a}\right|$ in Inequality 2A may be in the range of 0 meq/g to about 0.19 meq/g, 0 meq/g to about 0.18 meq/g, 0 meq/g to about 0.17 meq/g, 0 meq/g to about 0.16 meq/g, 0 meq/g to about 0.15 meq/g, 0 meq/g to about 0.14 meq/g, 0 meq/g to about 0.13 meq/g, 0 meq/g to about 0.12 meq/g, 0 meq/g to about 0.11 meq/g, 0 meq/g to about 0.10 meq/g, 0 meq/g to about 0.09 meq/g, 0 meq/g to about 0.08 meq/g, 0 meq/g to about 0.07 meq/g, 0 meq/g to about 0.06 meq/g, 0 meq/g to about 0.05 meq/g, 0 meq/g to about 0.04 meq/g, 0 meq/g to about 0.03 meq/g, 0 meq/g to about 0.02 meq/g, or 0 meq/g to about 0.01 meq/g.

According to an embodiment, each of $IEC_0$ and $IEC^a_{20}$ in Inequality 2A may be in the range of about 1 meq/g to about 5 meq/g, about 1.1 meq/g to about 5 meq/g, about 1.2 meq/g to about 5 meq/g, about 1.3 meq/g to about 5 meq/g, about 1.4 meq/g to about 5 meq/g, about 1.5 meq/g to about 5 meq/g, about 1.6 meq/g to about 5 meq/g, about 1.7 meq/g to about 5 meq/g, about 1.75 meq/g to about 5 meq/g, about 1.8 meq/g to about 5 meq/g, or about 1.85 meq/g to about 5 meq/g.

According to an embodiment, the anion exchange membrane may satisfy Inequality 2B:

Inequality 2B

$$0\ \text{meq/g} \leq \left|IEC_0 - IEC_{20}^{b}\right| \leq 0.2\ \text{meq/g}.$$

In Inequality 2B,

$IEC^b_{20}$ is the ion exchange capacity of an anion exchange membrane after 20 days in a basic solution, and $IEC_0$ is the ion exchange capacity of an initial anion exchange membrane.

Inequality 2B indicates that the ion exchange capacity of the anion exchange membrane remains substantially unchanged even after being exposed to a basic solution for 20 days.

According to an embodiment, $\left|IEC_0 - IEC_{20}^{b}\right|$ in Inequality 2B may be in the range of 0 meq/g to about 0.19 meq/g, 0 meq/g to about 0.18 meq/g, 0 meq/g to about 0.17 meq/g, 0 meq/g to about 0.16 meq/g, 0 meq/g to about 0.15 meq/g, 0 meq/g to about 0.14 meq/g, 0 meq/g to about 0.13 meq/g, 0 meq/g to about 0.12 meq/g, 0 meq/g to about 0.11 meq/g, 0 meq/g to about 0.10 meq/g, 0 meq/g to about 0.09 meq/g, 0 meq/g to about 0.08 meq/g, 0 meq/g to about 0.07 meq/g, 0 meq/g to about 0.06 meq/g, 0 meq/g to about 0.05 meq/g, 0 meq/g to about 0.04 meq/g, 0 meq/g to about 0.03 meq/g, 0 meq/g to about 0.02 meq/g, or 0 meq/g to about 0.01 meq/g.

According to an embodiment, each of $IEC_0$ and $IEC^b_{20}$ in Inequality 2B may be in the range of about 1 meq/g to about 5 meq/g, about 1.1 meq/g to about 5 meq/g, about 1.2 meq/g to about 5 meq/g, about 1.3 meq/g to about 5 meq/g, about 1.4 meq/g to about 5 meq/g, about 1.5 meq/g to about 5 meq/g, about 1.6 meq/g to about 5 meq/g, about 1.7 meq/g to about 5 meq/g, about 1.75 meq/g to about 5 meq/g, about 1.8 meq/g to about 5 meq/g, or about 1.85 meq/g to about 5 meq/g.

## Manufacturing method

According to another aspect, provided is a method of manufacturing an anion exchange membrane, the method including: preparing a composition for forming an anion exchange polymer including a first monomer represented by Formula A, a crosslinking agent represented by Formula B, a photoinitiator, and a solvent;

impregnating a porous polymer support with the composition for forming an anion exchange polymer to fill at least a portion of a surface and an interior of pores of the porous polymer support with the composition for forming an anion exchange polymer;
pressing a film onto at least a surface of the porous polymer support filled with the composition for forming an anion exchange polymer to produce a laminate in which the film and the porous polymer support are joined;
irradiating the laminate with light and crosslinking the composition for forming the anion exchange polymer to form an anion exchange polymer, which is a crosslinked product of the composition for forming the anion exchange polymer, on at least a portion of the surface and the interiors of the pores of the porous polymer support; and
forming an anion exchange membrane by peeling off the film from the porous polymer support of which at least a portion of the surface and the interiors of the pores is filled with the anion exchange polymer.

According to an embodiment, the composition for forming the anion exchange polymer may further include a second monomer represented by Formula C. That is, the composition for forming the anion exchange polymer may include all of the first monomer, the crosslinking agent, the second monomer, the photoinitiator, and the solvent.

The method of manufacturing the anion exchange membrane may further include, before the impregnating a porous polymer support with the composition for forming an anion exchange polymer and filling at least a portion of the surface and the interiors of the pores of the porous polymer support with the composition for forming an anion exchange polymer, immersing the porous polymer support in a surfactant solution and drying the same to hydrophilize the surface of the porous polymer support.

The hydrophilization process may be performed depending on the degree of hydrophilization of the porous polymer support or the structure of the porous polymer support, and may be omitted when the degree of hydrophilization is sufficient or the pores are sufficiently large so that the composition for forming the anion exchange polymer may be sufficiently filled.

In the hydrophilization process, immersing may be performed for about 0.1 minutes to about 10 minutes, or about 0.5 minutes to about 8 minutes. When the immersing is performed for less than 0.1 minutes, the surface of the porous polymer support may not be sufficiently hydrophilized, which may cause the composition for forming an anion exchange polymer to not be filled in the pores of the porous polymer support. When the immersing is performed for more than 10

minutes, a decrease in production speed and an increase in production costs may occur.

The anion exchange membrane may be in a pore-filled form in which the composition for forming the anion exchange polymer is filled in the pores of a porous polymer support. In some embodiments, the composition for forming the anion exchange polymer may wrap the outer surface of the porous polymer support.

In some embodiments, in the hydrophilization process, drying may be performed immediately after immersion, and may be performed at a temperature of about 40°C to about 90°C for about 1 minute to about 20 minutes, or at a temperature of about 40°C to about 80°C for about 1 minute to about 10 minutes.

Meanwhile, the surfactant solution may contain about 0.001 wt% to about 6 wt% of the surfactant and the remainder of the solvent, or may contain about 0.01 wt% to about 4 wt% of the surfactant and the remainder of the solvent, or may contain about 0.05 wt% to about 3 wt% of the surfactant and the remainder of the solvent.

When the surfactant is included in an amount of less than 0.001 wt% in the surfactant solution, the surface of the porous polymer support may not be hydrophilized, which may cause the ion exchange resin solution to not be filled into the pores of the substrate. When the surfactant is included in an amount exceeding 6 wt%, the surfactant may be eluted or the amount of the ion exchange resin that fills may be reduced.

Any known surfactant may be used without limitation. For example, the surfactant may be any material that has one or two alkyl chains having about 12 to 20 carbon atoms in the molecule. For example, the surfactant may include dodecylbenzenesulfonic acid (DBSA), alkylbenzenesulfonic acid (ABS), linearalkylbenzenesulfonic acid (LAS), alphasulfonic acid (AS), alphaolefinsulfonic acid (AOS), alcoholpolyoxyethyleneether (AE), alcoholpolyoxyethyleneethersulfonic acid (AES), dimethyldialkylammonium chloride, a quaternary ammonium salt of an amidoamine, a quaternary ammonium salt of an amidoesteramine, an imidazoline, an imidazoline ester, or any combination thereof. According to an embodiment, the surfactant may be a quaternary ammonium compound.

When a surfactant is bonded to a hydrophobic part of a porous polymer support surface through hydrophobic-hydrophobic interaction, the hydrophilic part of the surfactant becomes exposed at the surface of the porous polymer support, thereby achieving hydrophilization. In this regard, not only the outer surface of the porous polymer support but also the entire inner pore surface may be hydrophilized by the surfactant. However, when the degree of hydrophilization of the porous polymer support is sufficient or the pores of the porous polymer support are sufficiently large to allow filling with the composition for forming anion exchange polymer, the surfactant may not be used.

The content of the photoinitiator may be about 0.01 wt% to about 2 wt% or about 0.1 wt% to about 1 wt% based on 100 wt% of the total amount of the composition for forming the anion exchange polymer.

The photoinitiator may be used without limitation as long as it is a photoinitiator usable in the relevant technical field. In some embodiments, the photoinitiator may be, for example, at least one selected from 2-hydroxy-2-methylpropiophenone, 2-hydroxy-4-(2-hydroxyethoxy)-2-methylpropiophenone, and 1-hydroxy-cyclohexyl-phenyl-ketone.

The solvent may be used without limitation as long as it is a solvent usable in the relevant technical field, but may be, for example, a water-soluble solvent such as water, methanol or ethanol, or distilled water. The solvent may be included as a remainder in the composition for forming the anion exchange polymer, excluding the first monomer represented by Formula A, the crosslinking agent represented by Formula B, the second monomer represented by Formula C, and the photoinitiator (when the composition for forming the anion exchange polymer does not include the second monomer, the solvent may be included as a remainder in the composition for forming the anion exchange polymer, excluding the first monomer, the crosslinking agent, and the photoinitiator).

The film may be used without limitation as long as it is a film usable in the relevant technical field, but may be, for example, a polyester film (for example, a polyethylene terephthalate film).

The film may be pressed onto the upper surface and/or lower surface of the porous polymer support by roll calendaring. Pressing may be performed at a temperature of about 10 °C to about 35 °C, for example, at a temperature of about 15 °C to about 30 °C, and at a pressure of 0 bar to about 5 bar. The pressure may be appropriately adjusted considering the thickness of the porous polymer support and the thickness of the film.

The thickness of the film may be in the range of about 10 μm to about 200 μm, for example, about 10 μm to about 150 μm, about 20 μm to about 120 μm, or about 30 μm to about 100 μm. When the thickness of the film is less than 10 μm, bonding defects such as the film waving may occur when bonding with a support filled with an anion exchange polymer. When the thickness of the film exceeds 200 μm, the film thickness may be too great during the crosslinking reaction, so that light may not sufficiently irradiate the porous polymer support, and thus the crosslinking reaction may not occur sufficiently.

The light irradiated onto the laminate may be ultraviolet light. For example, ultraviolet A (UVA), ultraviolet B (UVB), ultraviolet C (UVC) and/or ultraviolet visible (UVV) may be used.

A process may be included in which irradiating is performed using UVC as light at a light dose of 2000 $mJ/cm^2$ to 10000 $mJ/cm^2$. For example, irradiation may be performed using UVC as the light at a light dose of 2000 $mJ/cm^2$ to 8000 $mJ/cm^2$. When photoirradiation is performed under these conditions, an ion exchange membrane with improved ion exchange capacity may be manufactured.

When peeling the film from the porous polymer support on which the anion exchange polymer is formed, the film attached to the porous polymer support may be pulled in the opposite direction using a peeling roller.

Accordingly, the manufactured anion exchange membrane may have an average thickness of about 10 μm to about 200 μm, for example, about 50 μm to about 200 μm. When the average thickness is less than 10 μm, the durability of the anion exchange membrane is reduced, which may result in membrane damage during operation, and desalination and concentration performance may be reduced due to unnecessary salt permeation. When the average thickness exceeds 200 μm, the surface resistance is high, which increases the power consumption required for operation, and desalination and concentration performance may be reduced.

Hereinafter, the present disclosure will be described in more detail by way of examples, but the present disclosure is not limited to these examples.

## Example 1

A polypropylene (PP) porous polymer support (porosity: 51%) with a thickness of 100 μm was prepared. The porous polymer support was immersed in a 2 wt% quaternary ammonium-based aqueous solution for 10 minutes and then dried in a hot air oven at 70°C for 10 minutes for hydrophilization. The hydrophilized porous polymer support was immersed in a composition for forming an anion exchange polymer, which is an ion exchange resin solution, for 5 minutes to fill the porous polymer support with the ion exchange resin solution.

In this regard, the composition for forming an anion exchange polymer was prepared by mixing 53 wt% of compound A3 as a first monomer represented by Formula A, 6 wt% of compound B1 as a crosslinking agent represented by Formula B, 0.5 wt% of 2-hydroxy-2-methylpropiophenone (manufactured by Ciba company) as a photoinitiator, and the remainder of distilled water. In this regard, the mole number of the first monomer: the mole number of the crosslinking agent was 4:1.

A polypropylene porous polymer support was impregnated with the composition for forming the anion exchange polymer such that the composition filled the surface and the interiors of the pores of the porous polymer support. The porous polymer support filled with the composition was placed into a pressing roll, and polyester films having a thickness of 50 μm were pressed onto the upper and lower surfaces of the porous polymer support at room temperature (25 °C) to manufacture a laminate in which the polyester films and the porous polymer support were combined. The laminate was irradiated with UVC ultraviolet rays at a dose of 3000 mJ/$cm^2$ to form an anion exchange polymer, which is a crosslinking product of the composition, on the surface and in the pores of the porous polymer support. The polyester films were peeled from the porous polymer support in which the anion exchange polymer was formed on the surface and in the pores of the porous polymer support, thereby manufacturing an anion exchange membrane.

## Example 2

An anion exchange membrane was prepared using the same method as in Example 1, except that, in preparing a composition for forming an anion exchange polymer, compound C1 was further mixed as a second monomer represented by Formula C, and the mole number of the first monomer: mole number of the crosslinking agent: mole number of the second monomer was adjusted to be 0.85:0.2:1.

## Examples 3 to 6

Anion exchange membranes were manufactured using the same method as in Example 2, except that the molar ratio of the first monomer, the crosslinking agent, and the second monomer was changed as shown in Table 1 below.

## Comparative Example 1 (Formula B not present)

An anion exchange membrane was manufactured using the same method as in Example 3, except that compound B1 represented by Formula B was not used as a crosslinking agent. Comparative Example 1 was marked with - in Table 1 below because a material represented by Formula B was not used.

## Comparative Example 2 (Formula B Unsatisfactory)

An anion exchange membrane was manufactured using the same method as in Example 3, except that in manufacturing a composition for forming an anion exchange polymer, ethylene glycol dimethacrylate (hereinafter referred to as EGDMA) was used instead of the crosslinking agent represented by Formula B. In this regard, the mole number of the first monomer: mole number of EGDMA: mole number of the second monomer was 0.8:0.3:1.

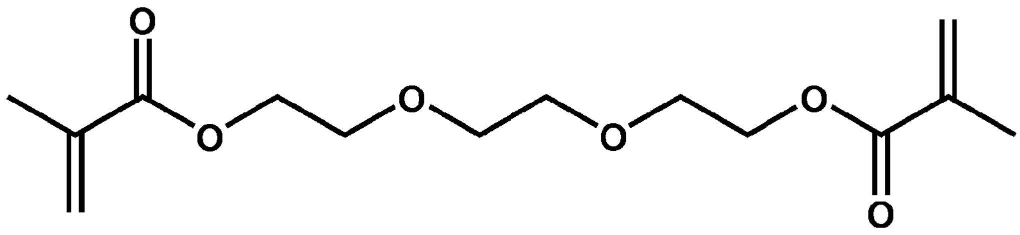

EGDMA

Referring to the structure of EGDMA, it can be seen that EGDMA does not belong to any of Formulae A to C described above.

In Comparative Example 2, EGDMA can play a role similar to that of a general crosslinking agent, but since it is a substance that does not belong to Formula B described above, "X" is indicated in Table 1 below and the type of substance is described in parentheses.

**Comparative Example 3 (Formula B not present, Formula C not satisfactory)**

An anion exchange membrane was prepared using the same method as in Comparative Example 1, except that in preparing a composition for forming an anion exchange polymer, (3-acrylamidopropyl)trimethylammonium chloride (hereinafter referred to as AMAC) was used instead of the second monomer represented by Formula C, and the molar ratio of each material was changed. The mole number of the first monomer: mole number of AMAC was 0.8:1.

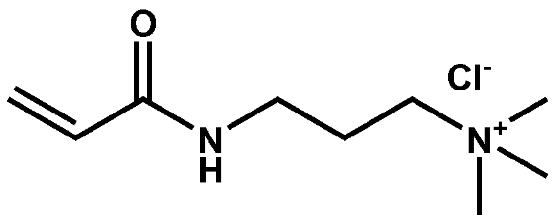

AMAC

Referring to the structure of AMAC, it can be seen that AMAC does not belong to any of Formulae A to C described above.

Comparative Example 3 was marked with - in Table 1 below because it did not use a substance represented by Formula B described above, and since AMAC can play a role similar to a general monomer but is a substance not represented by Formula C described above, it was marked with X in Table 1 below and the type of substance was described in parentheses.

**Example 7**

An anion exchange membrane was prepared in the same manner as in Comparative Example 3, except that when preparing a composition for forming an anion exchange polymer, compound B1 was further used as a crosslinking agent represented by Formula B, and the mole number of the first monomer: mole number of the crosslinking agent: mole number of AMAC was adjusted to be 0.8:0.3:1.

**Comparative Example 4 (Formula B not present, Formula C not satisfactory)**

An anion exchange membrane was manufactured using the same method as in Comparative Example 3, except that in manufacturing a composition for forming an anion exchange polymer, (N-(2-acryloyloxyethyl)-N-benzyl-N,N-dimethylammonium chloride (hereinafter referred to as AEBA) was used instead of AMAC.

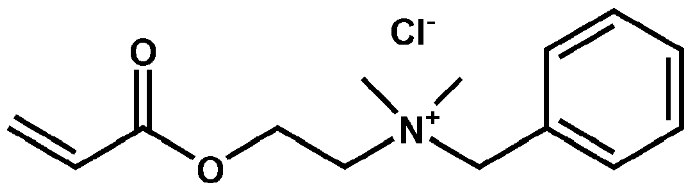

AEBA

Referring to the structure of AEBA, it can be seen that AEBA does not belong to any of Formulae A to C described above.

Comparative Example 4 was marked with - in Table 1 below because it did not use a substance represented by Formula B described above, and since AEBA can play a role similar to a general monomer but is a substance not represented by Formula C described above, it was marked with X in Table 1 below and the type of substance was described in parentheses.

**Comparative examples 5 to 7 (changing the molar ratio)**

Anion exchange membranes were manufactured using the same method as in Example 2, except that the molar ratio of each material was changed as shown in Table 1 below.

**Evaluation Example 1 (surface resistance)**

Each anion exchange membrane specimen was cut to a size of 5 cm × 5 cm to prepare a first sample and a second sample. The first sample is a sample for measuring a surface resistance change in an acidic solution, and the second sample is a sample for measuring a surface resistance change in a basic solution. Each of the first sample and the second sample was placed between electrodes dedicated to measuring surface resistance under conditions of 0.5 M NaCl solution to stabilize the measured values.

Each of the first sample and the second sample was placed between electrodes for measuring surface resistance, and the line resistance ($R_1$) of the anion exchange membrane was measured using an LCR meter (Agilent, E4980A). After removing the anion exchange membrane, the resistance ($R_2$) of a 0.5 M NaCl solution was measured. The surface resistance (SR) of the anion exchange membrane was calculated using Equation 1. Results are shown in Table 1 below:

Equation 1

$$SR = (R_1 - R_2) \times S$$

wherein, in Equation 1,

SR is a surface resistance of an anion exchange membrane ($\Omega$ cm$^2$),
$R_1$ is the line resistance of the anion exchange membrane,
$R_2$ is the resistance of 0.5 M NaCl solution, and
S is the area of an electrode.

The first sample, whose initial surface resistance was measured, was immersed in a 9.8 wt% $H_2SO_4$ solution for 20 days, and the surface resistance of the anion exchange membrane according to Equation 1 was repeatedly calculated, and results thereof are shown in Table 1 below.

The second sample, whose initial surface resistance was measured, was immersed in a 8 wt% NaOH solution for 20 days, and the surface resistance of the anion exchange membrane according to Equation 1 was repeatedly calculated, and results thereof are shown in Table 1 below.

**Evaluation Example 2 (Ion Exchange Capacity)**

Each anion exchange membrane was cut to a size of 5 cm X 5 cm to prepare a third sample and a fourth sample.

The third sample is a sample for measuring the change in ion exchange capacity in an acidic solution, and the fourth sample is a sample for measuring the change in ion exchange capacity in a basic solution. After washing each of the third sample and the fourth sample with distilled water, excess moisture was removed with a tissue. After filling vials with 70 ml of 1M NaCl solution, each of the third sample and the fourth sample, from which moisture had been removed, was placed in the 1M NaCl solution and immersed for more than 12 hours to perform a first pretreatment. The third sample and the fourth sample, which had undergone the first pretreatment, were each washed several times with distilled water and excess moisture was removed with a tissue. After filling the vials with 70 ml of 0.5 M $Na_2CO_3$ solution, each of the third sample and the fourth sample, from which moisture had been removed, was placed in the 0.5 M $Na_2CO_3$ solution and immersed for more than 12 hours to perform secondary pretreatment. The third sample and the fourth sample, which had completed the secondary pretreatment, were each removed from the vials, and the remaining solution was titrated with a 0.01 M $AgNO_3$ solution, and the volume of $AgNO_3$ solution added during titration was recorded. Each of the third sample and the fourth sample was washed several times with distilled water and then dried in a hot air oven at 70 °C for more than 1 hour. After drying was completed, the weight of the dried anion exchange membrane was measured. The ion exchange capacity (IEC) was calculated by applying the measured weight of the dried anion exchange membrane into Equation 2 below.

IEC (meq/g) = (volume of titrant (ml) x 0.01) / weight of dried anion exchange membrane (g)     Equation 2:

The third sample, whose initial ion exchange capacity was measured, was immersed in a 9.8 wt% $H_2SO_4$ solution for 20 days, and the evaluation was repeated to calculate the ion exchange capacity of the anion exchange membrane according to Equation 2, and results thereof are shown in Table 1 below.

The fourth sample, whose initial ion exchange capacity was measured, was immersed in an 8 wt% NaOH solution for 20 days, and the evaluation was repeated to calculate the ion exchange capacity of the anion exchange membrane according to Equation 2, and results thereof are shown in Table 1 below.

[Table 1]

| No. | Molar ratio of each substance | | | Surface resistance (Ω· $cm^2$) | | | | IEC (meq/g) | | | |
|---|---|---|---|---|---|---|---|---|---|---|---|
| | | | | Acid (first sample) | | Base (second sample) | | Acid (third sample) | | Base (fourth sample) | |
| | First monomer | Crosslinking agent | Second monomer | Initial | 20 days | Initial | 20 days | Initial | 20 days | Initial | 20 days |
| Example 1 | 4 | 1 | - | 3.08 | 3.09 | 3.07 | 3.51 | 2.31 | 2.32 | 2.32 | 2.19 |
| Example 2 | 0.85 | 0.2 | 1 | 2.21 | 2.25 | 2.20 | 2.24 | 1.87 | 1.85 | 1.86 | 1.87 |
| Example 3 | 0.8 | 0.3 | 1 | 2.41 | 2.40 | 2.41 | 2.43 | 1.86 | 1.84 | 1.86 | 1.87 |
| Example 4 | 0.75 | 0.4 | 1 | 2.45 | 2.48 | 2.44 | 2.49 | 1.84 | 1.83 | 1.84 | 1.85 |
| Example 5 | 0.7 | 0.5 | 1 | 2.69 | 2.71 | 2.70 | 2.72 | 1.83 | 1.82 | 1.83 | 1.84 |
| Example 6 | 0.65 | 0.7 | 1 | 2.96 | 2.97 | 2.95 | 2.96 | 1.78 | 1.77 | 1.78 | 1.78 |

(continued)

| No. | Molar ratio of each substance | | | Surface resistance (Ω· $cm^2$) | | | | IEC (meq/g) | | | |
|---|---|---|---|---|---|---|---|---|---|---|---|
| | | | | Acid (first sample) | | Base (second sample) | | Acid (third sample) | | Base (fourth sample) | |
| | First monomer | Crosslinking agent | Second monomer | Initial | 20 days | Initial | 20 days | Initial | 20 days | Initial | 20 days |
| Comparative Example 1 | 0.8 | - | 1 | 1.64 | 1.65 | 1.65 | 2.21 | 2.09 | 2.08 | 2.08 | 1.79 |
| Comparative Example 2 | 0.8 | X (EGDMA) | 1 | 1.95 | 1.96 | 1.94 | 3.84 | 1.98 | 1.97 | 1.97 | 1.58 |
| Comparative Example 3 | 0.8 | - | X (AMAC) | 1.59 | 1.60 | 1.59 | 4.51 | 2.10 | 2.09 | 2.11 | 1.1 |
| Example 7 | 0.8 | 0.3 | X (AMAC) | 2.98 | 3.0 | 2.97 | 3.51 | 2.11 | 2.10 | 2.10 | 1.90 |
| Comparative Example 4 | 0.8 | - | X (AEBA) | 1.79 | 1.80 | 1.81 | 5.10 | 2.08 | 2.07 | 2.09 | 0 |
| Comparative Example 5 | 0.5 | 0.1 | 1 | 1.91 | 1.92 | 1.91 | 2.77 | 1.90 | 1.91 | 1.91 | 1.61 |
| Comparative Example 6 | 1 | 0.3 | 1 | 2.11 | 2.11 | 2.10 | 2.75 | 1.79 | 1.78 | 1.79 | 1.57 |

(continued)

| No. | Molar ratio of each substance | | | Surface resistance (Ω· cm2) | | | | IEC (meq/g) | | | |
|---|---|---|---|---|---|---|---|---|---|---|---|
| | | | | Acid (first sample) | | Base (second sample) | | Acid (third sample) | | Base (fourth sample) | |
| | First monomer | Crosslinking agent | Second monomer | Initial | 20 days | Initial | 20 days | Initial | 20 days | Initial | 20 days |
| Comparative Example 7 | 0.8 | 1 | 1 | Membrane formation failed due to insufficient solubility | | | | | | | |

From Table 1, it can be seen that the anion exchange membranes according to Examples 1 to 7 effectively reduce the degree of change in surface resistance and the degree of change in ion exchange capacity over time in each of the acidic solution and the basic solution. However, it can be seen that the anion exchange membranes according to Comparative Examples 1 to 6 show relatively large changes in at least one of surface resistance and ion exchange capacity over time in an acidic solution or a basic solution. Accordingly, it can be seen that the anion exchange membrane according to an embodiment has excellent chemical resistance.

Referring to Examples 3 and 7, it can be seen that the surface resistance is effectively reduced by applying a second monomer represented by Formula C.

Regarding Example 7, although the second monomer represented by Formula C was not applied, due to the use of the first monomer represented by Formula A and the crosslinking agent represented by Formula B, excellent chemical resistance was obtained. Referring to Example 7 and Comparative Examples 3 and 4 together, it can be seen that when a crosslinking agent represented by Formula B is not used, the surface resistance and the ion exchange capacity change significantly over time under a basic condition. Specifically, when a crosslinking agent was not applied, the surface resistance increased excessively over time and the ion exchange capacity decreased excessively.

Referring to Examples 2 to 6 and Comparative Examples 5 and 6 together, it can be seen that the change in the surface resistance and/or the ion exchange capacity over time is suppressed by controlling the amounts of each of the first monomer represented by Formula A, the crosslinking agent represented by Formula B, and the second monomer represented by Formula C.

In addition, referring to Comparative Example 7, at a specific amount ratio of the first monomer represented by Formula A, the crosslinking agent represented by Formula B, and the second monomer represented by Formula C, they did not dissolve in the solvent and thus a composition was not formed, making it impossible to manufacture an anion exchange membrane.

In addition, it can be seen that the anion exchange membranes according to Examples 1 to 7 have excellent chemical resistance, and simultaneously exhibit favorable low levels of surface resistance and high levels of ion exchange capacity in an acidic solution and a basic solution.

An anion exchange membrane according to one aspect is prepared from a composition for forming an anion exchange polymer, which includes a first monomer represented by Formula A, a crosslinking agent represented by Formula B, and/or optionally, a second monomer represented by Formula C, thereby having excellent chemical resistance under an acidic condition or a basic condition. Specifically, the anion exchange membrane can have the characteristics of effectively reducing changes in surface resistance and ion exchange capacity (IEC) over time under an acidic condition or a basic condition. In addition, the anion exchange membrane can have excellent chemical resistance while having a low level of surface resistance and a high level of ion exchange capacity under an acidic condition or a basic condition.

The above description is for illustrative purposes only, and those skilled in the art will appreciate that the present disclosure may be easily modified into other specific forms without changing the technical spirit or essential characteristics of the present disclosure. Therefore, it should be understood that the embodiments described above are exemplary in all respects and not limiting.

## Claims

**1.** A composition for forming an anion exchange polymer, comprising:

a first monomer represented by Formula A; and
a crosslinking agent represented by Formula B:

Formula A

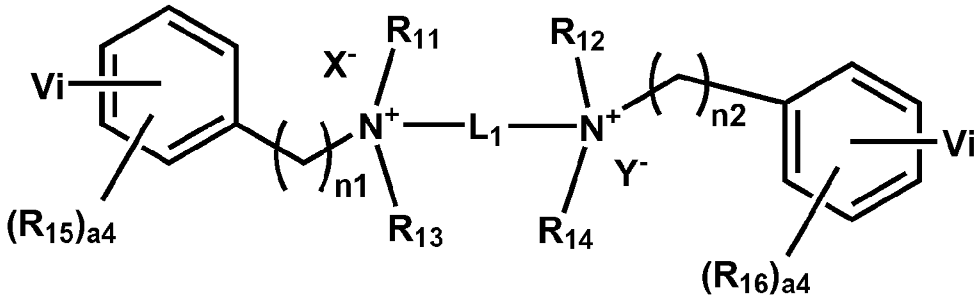

Formula B

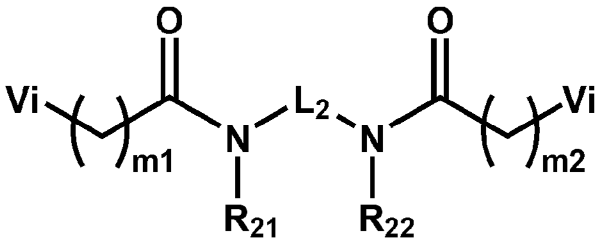

wherein, in Formulae A and B,
Vi is a vinyl group,
$R_{11}$ to $R_{16}$, $R_{21}$, and $R_{22}$ are each independently selected from hydrogen, deuterium, a substituted or unsubstituted $C_1$-$C_{20}$ alkyl group, and a substituted or unsubstituted $C_2$-$C_{20}$ alkenyl group,
$R_{11}$ and $R_{12}$ are optionally bonded to each other,
$R_{13}$ and $R_{14}$ are optionally bonded to each other,
$R_{21}$ and $R_{22}$ are optionally bonded to each other,
a4 is an integer from 0 to 4,
$L_1$ and $L_2$ are each independently selected from a single bond and a substituted or unsubstituted $C_1$-$C_{20}$ alkylene group,
$X^-$ and $Y^-$ are each independently selected from F-, $Cl^-$, $Br^-$ and $I^-$, and
each of n1, n2, m1, and m2 is an integer from 0 to 10.

**2.** The composition of claim 1, wherein
the crosslinking agent is at least one selected from compounds B1 to B3:

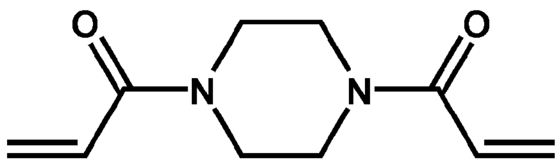

**B1**

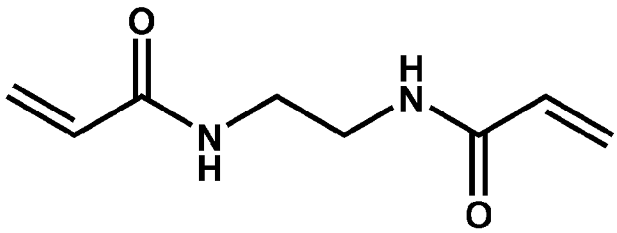

**B2**

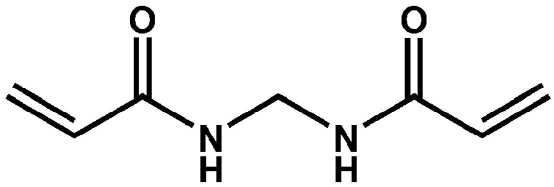

**B3**

**3.** The composition of claim 1, wherein
a ratio of a mole number of the first monomer to a mole number of the crosslinking agent is about 0.9:1 to about 4.5:1.

**4.** The composition of claim 1, further comprising

a second monomer represented by Formula C:

Formula C

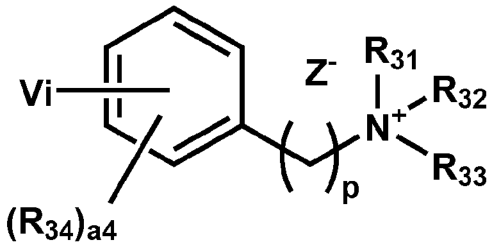

wherein, in Formula C,
Vi is a vinyl group,
$R_{31}$ to $R_{34}$ are each independently selected from hydrogen, deuterium, a substituted or unsubstituted $C_1$-$C_{20}$ alkyl group, and a substituted or unsubstituted $C_2$-$C_{20}$ alkenyl group,
a4 is an integer from 0 to 4,
$Z^-$ is selected from $F^-$, $Cl^-$, $Br^-$ and $I^-$, and
p is an integer from 0 to 10.

**5.** The composition of claim 4, wherein
a ratio of a mole number of the first monomer to a mole number of the second monomer is about 0.65:1 to about 0.85:1.

**6.** The composition of claim 4, wherein
a ratio of a mole number of the second monomer to a mole number of the crosslinking agent is about 1:0.2 to about 1:0.7.

**7.** An anion exchange membrane comprising:

a porous polymer support; and

an anion exchange polymer, wherein
the anion exchange polymer is a crosslinked product of the composition according to claim 1.

**8.** The anion exchange membrane of claim 7, wherein
the anion exchange polymer is uniformly distributed on a surface of the porous polymer support and within pores of the porous polymer support.

**9.** The anion exchange membrane of claim 7, wherein
an average thickness of the anion exchange membrane is about 50 micrometers (μm) to about 200 μm.

**10.** The anion exchange membrane of claim 7, wherein

the anion exchange membrane satisfies Inequality 1A:

Inequality 1A

$$0\ \Omega\cdot\text{cm}^2 \leq |SR_{20}^{a} - SR_0| \leq 0.5\ \Omega\cdot\text{cm}^2,$$

wherein, in Inequality 1A,

$SR^a_{20}$ is a surface resistance of the anion exchange membrane after 20 days in an acidic solution, and
$SR_0$ is a surface resistance of an initial anion exchange membrane.

**11.** The anion exchange membrane of claim 10, wherein
$SR^a_{20}$ and $SR_0$ in Inequality 1A are each in the range of about 0.1 $\Omega\cdot cm^2$ to about 3.0 $\Omega\cdot cm^2$.

**12.** The anion exchange membrane of claim 7, wherein

the anion exchange membrane satisfies Inequality 1B:

Inequality 1B

$$0\ \Omega\cdot\text{cm}^2 \leq \left|SR_{20}^{b} - SR_0\right| \leq 0.5\ \Omega\cdot\text{cm}^2,$$

wherein, in Inequality 1B,
$SR^b_{20}$ is a surface resistance of the anion exchange membrane after 20 days in a basic solution, and
$SR_0$ is a surface resistance of an initial anion exchange membrane.

**13.** The anion exchange membrane of claim 12, wherein
$SR^b_{20}$ and $SR_0$ in Inequality 1B are each in the range of about 0.1 $\Omega\cdot cm^2$ to about 3.0 $\Omega\cdot cm^2$.

**14.** The anion exchange membrane of claim 7, wherein

the anion exchange membrane satisfies Inequality 2A:

Inequality 2A

$$0\ \text{meq/g} \leq |IEC_0 - IEC_{20}^{a}| \leq 0.2\ \text{meq/g},$$

wherein, in Inequality 2A,
$IEC^a_{20}$ is an ion exchange capacity of an anion exchange membrane after 20 days in an acidic solution, and
$IEC_0$ is an ion exchange capacity of an initial anion exchange membrane.

**15.** The anion exchange membrane of claim 7, wherein

the anion exchange membrane satisfies Inequality 2B:

Inequality 2B

$$0\ \text{meq/g} \leq \left| IEC_0 - IEC_{20}^{b} \right| \leq 0.2\ \text{meq/g},$$

wherein, in Inequality 2B,
$IEC^b_{20}$ is an ion exchange capacity of an anion exchange membrane after 20 days in a basic solution, and
$IEC_0$ is an ion exchange capacity of an initial anion exchange membrane.

FIG. 1

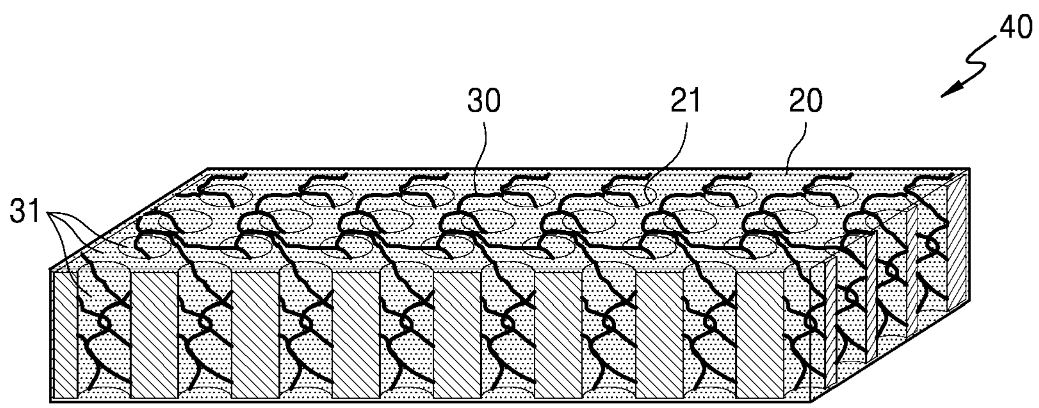

Europäisches Patentamt
European Patent Office
Office européen des brevets

# EUROPEAN SEARCH REPORT

Application Number
EP 25 19 9792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/369073 A1 (INOUE KAZUOMI [JP] ET AL) 22 December 2016 (2016-12-22) * claims; examples * ----- | 1-15 | INV. C08J5/22 |
| A | US 2017/333846 A1 (INOUE KAZUOMI [JP]) 23 November 2017 (2017-11-23) * claims; examples * ----- | 1-15 | |
| A | US 2015/232627 A1 (YIN XIANGCHUN [CA] ET AL) 20 August 2015 (2015-08-20) * claims; examples * ----- | 1-15 | |
| A | WO 2024/019307 A1 (TORAY ADVANCED MAT KOREA INC [KR]) 25 January 2024 (2024-01-25) * claims; examples * ----- | 1-15 | |

TECHNICAL FIELDS SEARCHED (IPC)

C08J

The present search report has been drawn up for all claims

2

| Place of search | Date of completion of the search | Examiner |
|---|---|---|
| Munich | 16 February 2026 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 19 9792

This annex lists the patent family members relating to the patent documents cited in the above-mentioned European search report. The members are as contained in the European Patent Office EDP file on
The European Patent Office is in no way liable for these particulars which are merely given for the purpose of information.

16-02-2026

| Patent document cited in search report | Publication date | Patent family member(s) | Publication date |
|---|---|---|---|
| US 2016369073 A1 | 22-12-2016 | EP 3124107 A1 | 01-02-2017 |
| | | ES 2671144 T3 | 05-06-2018 |
| | | JP 6093728 B2 | 08-03-2017 |
| | | JP 2015182047 A | 22-10-2015 |
| | | US 2016369073 A1 | 22-12-2016 |
| | | WO 2015146809 A1 | 01-10-2015 |
| US 2017333846 A1 | 23-11-2017 | JP 2018057987 A | 12-04-2018 |
| | | US 2017333846 A1 | 23-11-2017 |
| | | WO 2016132799 A1 | 25-08-2016 |
| US 2015232627 A1 | 20-08-2015 | AU 2013332203 A1 | 09-04-2015 |
| | | CA 2858238 A1 | 24-04-2014 |
| | | CN 104822654 A | 05-08-2015 |
| | | EP 2909168 A1 | 26-08-2015 |
| | | US 2015232627 A1 | 20-08-2015 |
| | | US 2016318013 A1 | 03-11-2016 |
| | | WO 2014059516 A1 | 24-04-2014 |
| WO 2024019307 A1 | 25-01-2024 | CN 119816548 A | 11-04-2025 |
| | | EP 4559955 A1 | 28-05-2025 |
| | | JP 2025523983 A | 25-07-2025 |
| | | KR 20240011301 A | 26-01-2024 |
| | | US 20260021451 A1 | 22-01-2026 |
| | | WO 2024019307 A1 | 25-01-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240162271